(19) Europäisches Patentamt

European Patent Office

Office européen des brevets

(11) **EP 0 821 830 B1**

(12) **FASCICULE DE BREVET EUROPEEN**

(45) Date de publication et mention
de la délivrance du brevet:
**19.06.2002   Bulletin 2002/25**

(51) Int Cl.⁷: **H01H 83/14**, H01H 83/22,
H02H 3/33, H01F 1/153

(21) Numéro de dépôt: 96913603.5

(22) Date de dépôt: **18.04.1996**

(86) Numéro de dépôt international:
**PCT/FR96/00586**

(87) Numéro de publication internationale:
**WO 96/33505 (24.10.1996 Gazette 1996/47)**

(54) **DECLENCHEUR PAR COURANT DE DEFAUT SENSIBLE AUX COURANTS PULSES**

FEHLERSTROMSCHUTZSCHALTER DER AUF PULSSTRÖME REAGIERT

FAULT CURRENT TRIPPING DEVICE SENSITIVE TO PULSATING CURRENTS

(84) Etats contractants désignés:
**BE DE ES GB IT**

(30) Priorité: **18.04.1995  FR 9504852**

(43) Date de publication de la demande:
**04.02.1998   Bulletin 1998/06**

(73) Titulaire: **Schneider Electric Industries SA
92500 Rueil-Malmaison (FR)**

(72) Inventeurs:
• **BONNIAU, Michel
F-71640 Dracy-le-Fort (FR)**
• **PAUPERT, Marc
F-71100 Chalon-sur-Saône (FR)**

(74) Mandataire: **Ritzenthaler, Jacques et al
Schneider Electric SA
Service Propriété Industrielle
38050 Grenoble Cédex 9 (FR)**

(56) Documents cités:
**EP-A- 0 504 674          EP-A- 0 563 606
DE-A- 3 909 747**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un déclencheur par courant de défaut sensible aux courants pulsés, comportant un transformateur d'intensité, un relais de déclenchement et un circuit secondaire reliant ledit relais au transformateur, ledit transformateur comprenant un tore à noyau magnétique, des enroulements primaires formés par les conducteurs actifs d'une installation électrique à protéger et un enroulement secondaire aux bornes duquel s'établit un signal de défaut différentiel lors de l'apparition d'un défaut différentiel dans les enroulements primaires, l'enroulement secondaire précité étant destiné à être relié à un relais de déclenchement d'un appareil de coupure du courant par un circuit secondaire de connexion agencé pour provoquer le déclenchement lorsque ledit signal dépasse un seuil prédéterminé.

Les déclencheurs par courant de défaut sont utilisés depuis de nombreuses années pour la protection des machines et des personnes. Pour la protection des personnes, le courant de déclenchement peut se situer environ à 30mA, tandis qu'il se situe dans une plage d'environ 300 à 500 mA pour la protection des machines.

Or, ces dernières années, on incorpore de plus en plus des dispositifs électroniques à effet redresseur du courant dans de nombreux appareils électriques. Ces effets redresseurs peuvent engendrer une composante continue susceptible d'influencer le fonctionnement du dispositif différentiel. L'utilisation accrue de déclencheurs électroniques, notamment dans les appareils ménagers requiert également que ceux-ci répondent en toute sécurité non seulement à des courants alternatifs mais aussi à des courants de défaut continus pulsés. Les valeurs limites définies pour de tels déclencheurs ont été fixées par la norme VDE 0664. On connaît des déclencheurs du genre précédemment mentionné, et répondant à cette spécificité, dans lesquels le noyau magnétique du tore du transformateur est réalisé en un matériau cristallin adapté à cette utilisation. Les principales grandeurs caractéristiques de ces matériaux sont l'amplitude d'induction ^B pour un courant d'excitation sinusoïdal, l'élévation d'induction statique ΔB stat pour un courant d'excitation sinusoïdal redressé à une seule alternance, ainsi que l'élévation d'induction dynamique ΔB dyn pour un courant d'excitation sinusoïdal redressé à deux alternances.

Dans ces déclencheurs, il est connu de monter un condensateur entre l'enroulement secondaire du transformateur et l'enroulement de déclenchement du relais afin d'augmenter la sensibilité du déclencheur en augmentant la puissance au niveau du relais. Un circuit oscillant est ainsi formé par l'enroulement secondaire et le condensateur. La fréquence de résonance de ce circuit oscillant doit alors être harmonisée avec la fréquence de la tension dans l'enroulement secondaire du fait du courant de défaut. Le réglage de ce circuit résonnant s'effectue en définissant le nombre de spires de l'enroulement secondaire en partant des valeurs de capacités préscrites pour le condensateur, et les conditions de déclenchement du déclencheur sont déterminées. Or, le nombre de spires définitivement réglé ne représente simplement qu'un compromis entre les différentes formes de courant de défaut.

La demande de brevet européen EP-0.563.606 décrit un transformateur d'intensité pour déclencheur, permettant d'obtenir une interruption sûre d'un circuit utilisateur soumis à des courants pulsés, le déclenchement étant réalisé de façon pratiquement indépendante de la forme de courant de défaut. Ces résultats sont obtenus grâce à l'utilisation d'un noyau magnétique réalisé en un matériau nanocristallin présentant les caractéristiques magnétiques suivantes : Br/Bs < 0, 3, DBdyn >0, 6T, pour une amplitude de l'intensité de champ de 100 mA/cm, DBdyn max > 0, 7T et DBdyn/^B > 0,7, ces noyaux magnétiques ayant été réalisés en deux étapes.

Or, les grandeurs magnétiques définies dans ce brevet sont mesurées à la fréquence de 50 Hz, alors que les courants pulsés définis dans la VDE 0664 peuvent posséder des harmoniques supérieures à 50 Hz de forte amplitude. Il en résulte que ce type de déclencheur ne peut pas être utilisé avantageusement pour des appareils électriques comportant par exemple, des thyristors dont l'angle d'ouverture est de 135°, l'amplitude de l'harmonique 400 Hz correspondant encore pour cet angle à 30% de celle de l'harmonique à 50 Hz.

La présente invention résout ces problèmes et propose un déclencheur comportant un transformateur d'intensité, présentant une meilleure sensibilité, particulièrement aux courants pulsés pour des angles d'amorçage pouvant aller jusqu'à 135° voire au delà ainsi qu'un seuil de déclenchement régulier.

A cet effet, la présente invention a pour objet un déclencheur par courant de défaut selon la revendication 1.

Avantageusement, le noyau magnétique du tore présente un rapport de rémanence Br/Bs < 0,3, une élévation d'induction dynamique DB (dyn) > 0,6T, pour une amplitude de l'intensité de champ de 100 mA/cm, une élévation d'induction dynamique maximale supérieure à 0,7T, et un rapport entre l'élévation d'induction dynamique et l'amplitude d'induction $\frac{\Delta B\ dyn}{^B} > 0,7$.

Avantageusement, le noyau magnétique est réalisé à partir d'un alliage à base de fer magnétique doux, composé à plus de 50% de grains à cristaux fins d'une taille inférieure à 100 nm et contenant, en plus d'une teneur en fer supérieure à 60% (at), 0,5 à 2% de cuivre, 2 à 5% au moins de l'un des métaux suivants niobium, tungstène, tantale, zirconium, hafnium, titane et/ou molybdène, 5 à 14% de bore et 14 à 17% de silicium.

Selon une réalisation particulière, le noyau magnétique du tore est réalisé en un matériau nanocristallin.

Selon une autre réalisation, le noyau magnétique du tore est réalisé en un matériau amorphe.

Avantageusement, le circuit secondaire comporte en outre une capacité de stockage et des moyens de comparaison connectés à la capacité de stockage et comportant une sortie de contrôle reliée à des moyens de commande du relais, de manière à fournir un signal de déclenchement au relais si la valeur de la tension de la capacité est supérieure à un seuil prédéterminé.

Avantageusement, les moyens de comparaison comportent un comparateur ou une diode à seuil de tension.

De préférence, les moyens de commande du relais comportent un thyristor.

Mais d'autres avantages et caractéristiques de l'invention apparaîtront mieux dans la description détaillée qui suit et se réfère aux dessins annexés donnés uniquement à titre d'exemple et dans lesquels :

La figure 1 est une représentation graphique illustrant la décomposition d'un signal de courants pulsés, pour un angle d'amorçage de 0° (valeur efficace du courant en mA, en fonction de la fréquence en Hz).

La figure 2 illustre la décomposition d'un signal de courants pulsés, pour un angle d'amorçage de 90°.

La figure 3 illustre la décomposition d'un signal de courants pulsés, pour un angle d'amorçage de 135°.

La figure 4 est une représentation graphique, illustrant l'élévation d'induction dynamique (relative à 50 Hz), en fonction de la fréquence (en Hz), pour une amplitude d'intensité de champs H crête de 34 mAT/cm, et

Les figures 5, 6 et 7 et 8 représentent schématiquement quatre modes de réalisation différents du déclencheur de l'invention.

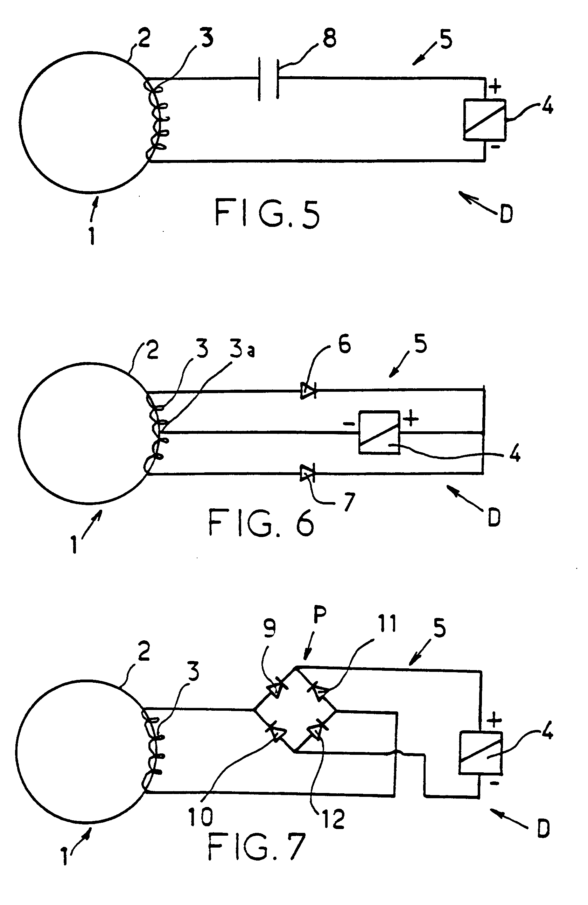

Sur les figures 5, 6, 7 et 8, on voit respectivement quatre réalisations d'un déclencheur D conforme à l'invention, destiné à être incorporé ou associé à un disjoncteur électrique (non représenté) de coupure des conducteurs actifs alimentant une installation électrique à protéger. Ce déclencheur D comporte communément aux quatre réalisations, un transformateur différentiel 1 constitué par un tore 2 à noyau magnétique comportant un enroulement primaire (non représenté) formé par les conducteurs actifs traversant le tore 2, et un enroulement secondaire 3 relié à la bobine d'un relais 4 de déclenchement, du type polarisé, par un circuit secondaire de connexion 5. Le circuit secondaire 5 du déclencheur D, représenté sur la figure 5, est constitué par un condensateur 8 monté en série avec l'enroulement secondaire 3 du transformateur 1 et le relais polarisé 4. Dans la seconde réalisation du déclencheur décrite sur la figure 6, ce circuit secondaire 5 comporte deux diodes 6, 7 reliées en entrée respectivement aux deux extrémités de l'enroulement secondaire 3, et en sortie au pôle positif du relais de déclenchement 4, tandis que le pôle négatif du relais 4 est relié en un point milieu 3a de l'enroulement secondaire 3.

Dans la réalisation illustrée sur la figure 7, le circuit secondaire 5 comporte un pont P de diodes comprenant quatre diodes 9 à 12.

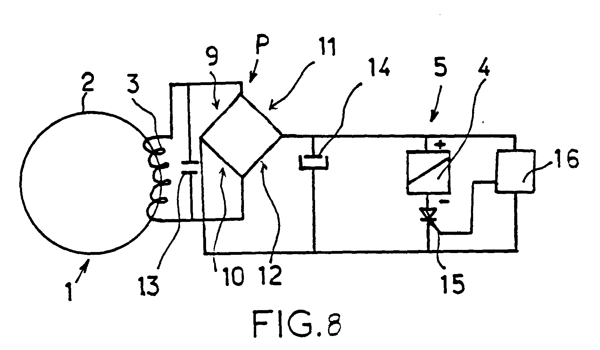

Dans la réalisation illustrée sur la figure 8, le circuit secondaire 5 comporte un condensateur d'accord 13 relié en parallèle avec l'enroulement secondaire 3 du tore 2 et un pont redresseur P, dont les sorties sont reliées en parallèle à une capacité de stockage 14, laquelle est reliée en parallèle avec le relais 4 et un thyristor 15 montés en série, et un circuit à seuil 16 comportant une sortie de contrôle reliée au thyristor 15.

Selon les trois premières réalisations, le relais de déclenchement 4 commande le déclenchement du disjoncteur lorsque le signal de défaut délivré à la bobine du relais 4, lors de l'apparition d'un courant de défaut dans les enroulements primaires, dépasse un seuil prédéterminé de déclenchement. Dans la quatrième réalisation, le circuit à seuil 16 fournit un signal de déclenchement au relais 4 par l'intermédiaire du thyristor 15 lorsque la tension aux bornes de la capacité de stockage 13 dépasse un certain seuil. On notera que le relais de déclenchement 4 est avantageusement du type polarisé utilisant une seule alternance du signal ou bien deux alternances. Dans la première réalisation, la capacité 8 a pour but de composer un filtre de mise en forme avec les inductances du tore détecteur 2 et du relais déclencheur 4. La valeur de cette capacité est déterminée par les moyens usuels de calcul et de détermination des filtres; elle tient compte du nombre de spires de l'enroulement secondaire 3 et de la bobine 4 ainsi que des matériaux magnétiques mis en jeu pour la conception du tore 2. L'emploi d'un tel filtre de mise en forme du signal de défaut délivré par le tore 2 permet de conserver un même seuil de déclenchement du dispositif de protection en régime de courant alternatif, en régime de courant de défaut redressé simple ou double alternance etc... Dans les réalisations illustrées sur les figures 6,7 et 8 ,la symètrisation des seuils en courants pulsés, est réalisée par les redresseurs (deux diodes ou pont de diodes).

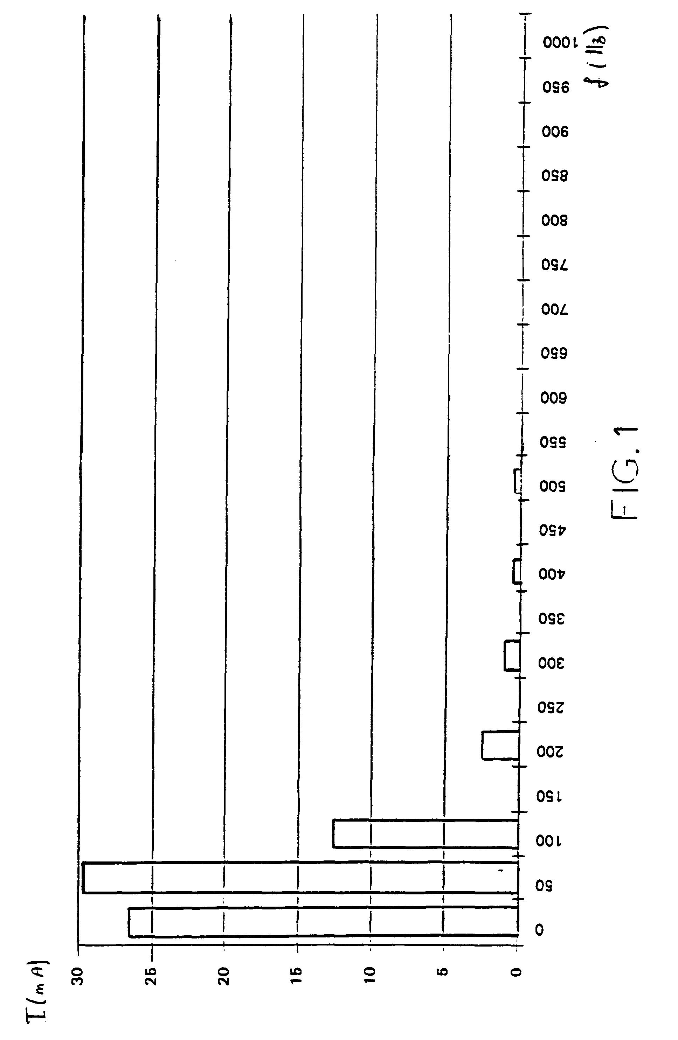

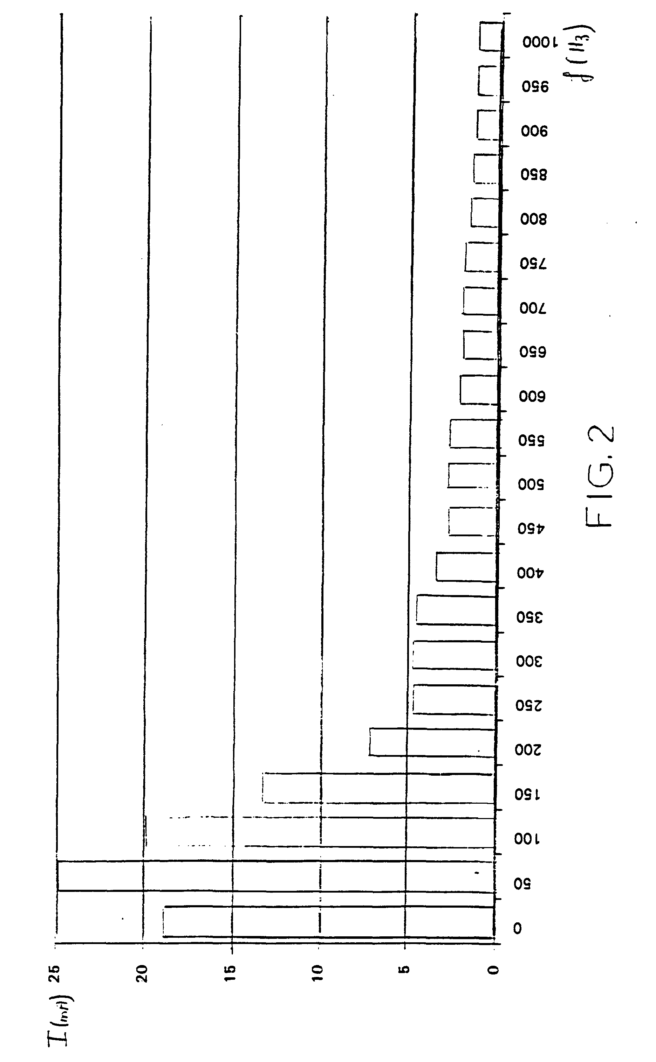

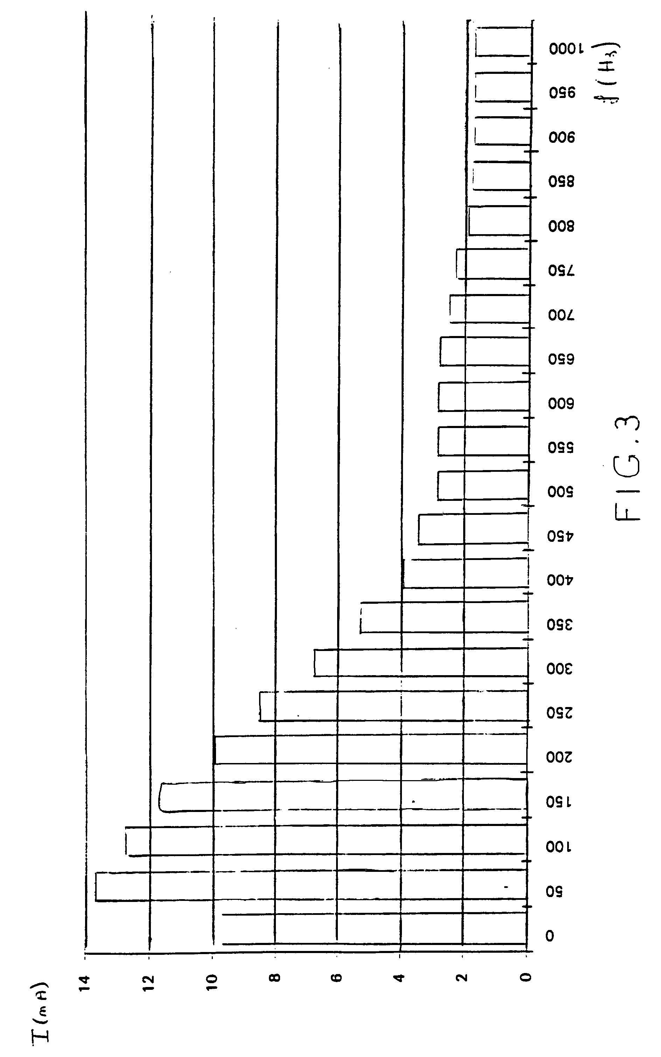

En se reportant aux figures 1, 2 et 3, on peut observer la décomposition d'un signal de classe A (courants pulsés) (42 mA RMS 50 Hz) pour différents angles d'amorçage ($\alpha$) respectivement $\alpha$ = 0°,90° et 135°. On voit ainsi que pour des angles d'amorçage de 0 ou bien 90 ° (figures 1 et 2), les courants pulsés peuvent avoir des harmoniques supérieures à 50 Hz, de faible amplitude. On voit par contre que, pour un angle d'amorçage de 135° (figure 3), ce qui peut être le cas pour des thyristors de gradateurs, les courants pulsés peuvent avoir des harmoniques de forte amplitude. Sur cette figure 3, on voit en effet que pour α = 135°, l'amplitude de l'harmonique 400 Hz correspond encore environ à 30% de l'amplitude de l'harmonique fondamental.

Conformément à l'invention, le noyau magnétique du tore 2 du transformateur 1 présente un rapport entre l'élévation d'induction dynamique à 400 Hz et l'élévation d'induction dynamique à 50 Hz supérieure à 0, 7, pour une amplitude de l'intensité de champ d'environ 35 mA t/cm. Grâce à cette caractéristique magnétique du noyau, on observe une amélioration du fonctionnement en classe A, c'est à dire un abaissement des seuils de déclenchement pour des courants pulsés, au moins jusqu'à cet angle de 135°. On notera que cette réduction des seuils pour α = 135° sera de l'ordre de 15%.

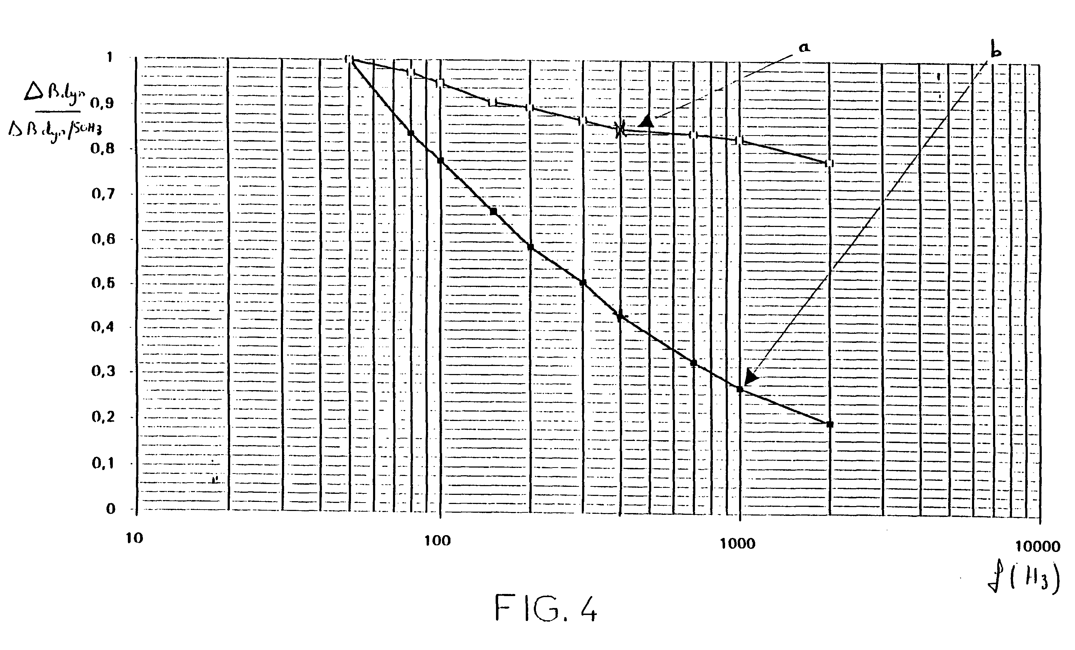

En se reportant à la figure 4, on voit que pour un matériau nanocristallin dont la courbe (a) représente la relation entre le ΔByn relatif à 50 Hz et la fréquence, cette caractéristique peut-être vérifiée. On voit par contre qu'elle n'est pas vérifiée pour un matériau du type cristallin dont la même courbe est représentée en (b).

On utilisera donc de préférence un matériau nanocristallin. Avantageusement, ce noyau magnétique pourra être constitué d'un alliage à base de fer magnétique doux constitué d'au moins 50% de cristallites d'une taille inférieure à 100nm et contenant en pourcentage atomique : en plus d'une teneur en fer supérieure à 60%, 0, 5 à 2 % de cuivre, 2 à 5 % au moins de l'un des métaux suivants, niobium, tungstène, tantale, zirconium, hafnium, titane et/ou molybdène, 5 à 14% de bore et 14 à 17% de silicium.

Lorsque ce transformateur 1 sera utilisé dans un déclencheur D du type décrit sur la figure 5, des caractéristiques magnétiques supplémentaires seront avantageuses pour obtenir à la fois une grande sensibilité aux défauts de courant pulsés et un seuil de déclenchement régulier, lesquelles caractéristiques sont les suivantes : un rapport de rémanence Br/Bs < 0, 3, DBdyn > 0, 6 T pour H = 100 mA/cm, DBdyn max > 0, 7 T et DBdyn/^B > 0, 7.

Ces valeurs magnétiques pourront être obtenues par deux traitement thermiques successifs effectués sur une bande magnétique obtenue par trempe (ruban d'alliage amorphe refroidi rapidement). Le premier traitement thermique consiste en un traitement de nanocristallisation, avec application d'un champ magnétique longitudinal (suivant la direction de la bande), tandis que le second traitement sera réalisé sous champ transverse.

Lorsque le transformateur 1 sera utilisé dans un déclencheur D selon les figures 6,7 et 8, les mêmes propriétés pourront être obtenues avec des caractéristiques magnétiques moindres, notamment DBdyn (100 mAt/cm) < 0, 6 T, DBdyn max < 0, 7 T et DBdyn/^B < 0, 7.

Selon une autre réalisation de l'invention, ce noyau magnétique pourra être réalisé en un matériau amorphe, car ce type de matériau ne présente pas de pertes magnétiques élevées, un traitement approprié du noyau lui conférant les caractéristiques magnétiques appropriées conformes à l'invention, à savoir DBdyn (400 Hz)/ DBdyn (50 Hz) > 0, 7, pour H = 35 mAt/cm.

On a donc réalisé grâce à l'invention un déclencheur par courant de défaut, présentant une sensibilité améliorée aux courants pulsés (seuils de déclenchement plus bas), notamment lorsque utilisés avec des appareils électriques présentant des angles d'ouverture pouvant aller jusqu'à 135°voire au delà.

Bien entendu, l'invention n'est pas limitée aux modes de réalisation décrits et illustrés qui n'ont été donnés qu'à titre d'exemple.

## Revendications

1. Déclencheur par courant de défaut sensible aux courants pulsés, comportant un transformateur d'intensité (1), un relais de déclenchement (4) et un circuit secondaire (5) reliant ledit relais au transformateur, ledit transformateur comprenant un tore à noyau magnétique (2), des enroulements primaires formés par les conducteurs actifs d'une installation électrique à protéger et un enroulement secondaire (3) aux bornes duquel s'établit un signal de défaut différentiel lors de l'apparition d'un défaut différentiel dans les enroulements primaires, l'enroulement secondaire précité étant destiné à être relié au relais de déclenchement par le circuit secondaire agencé pour provoquer le déclenchement lorsque ledit signal dépasse un seuil prédéterminé, **caractérisé en ce que** le noyau magnétique du tore (2) précité présente un rapport entre l'élévation d'induction dynamique ΔB dyn à 400 Hz et l'élévation d'induction dynamique ΔB dyn à 50 Hz supérieur à 0, 7, pour une amplitude de l'intensité de champ H d'environ 35 mat/cm et **en ce que** le circuit secondaire précité (5) comporte un redresseur à double alternance (6,7;9 à 12), ledit redresseur comportant deux diodes (6,7) reliant respectivement les deux extrémités de l'enroulement secondaire (3) à l'une des extrémités de la bobine du relais (4), dont l'autre extrémité est reliée en un point milieu (3a) de l'enroulement secondaire (3).

2. Déclencheur selon la revendication 1, **caractérisé en ce que** le noyau magnétique du tore (2) présente un rapport de rémanence Br/Bs < 0,3, une élévation d'induction dynamique Δ B (dyn) > 0,6T, pour une amplitude de l'intensité de champ de 100 mA/cm, une élévation d'induction dynamique maximale ΔB dyn max supérieure à 0,7T, et un rapport entre l'élévation d'induction dynamique et l'amplitude d'induction $\frac{\Delta b\,dyn}{^B} > 0,7$.

3. Déclencheur selon la revendication 1 ou 2, **caractérisé en ce que** le noyau magnétique est réalisé à partir d'un alliage à base de fer magnétique doux, composé à plus de 50% de grains à cristaux fins d'une taille inférieure à 100 nm et contenant, en plus d'une teneur en fer supérieure à 60% (at), 0,5 à 2% de cuivre, 2 à 5% au moins de l'un des métaux suivants niobium, tungstène, tantale, zirconium, hafnium, titane et/ou molybdène, 5 à 14% de bore et 14 à 17% de silicium.

4. Déclencheur selon l'une quelconque des revendications précédentes, **caractérisé en ce que** le noyau magnétique du tore (2) est réalisé en un matériau nanocristallin.

5. Déclencheur selon la revendication 1, **caractérisé en ce que** le noyau magnétique du tore (2) est réalisé en un matériau amorphe.

6. Déclencheur selon l'une quelconque des revendications 1 à 5, **caractérisé en ce que** le redresseur précité comporte un pont de diodes P reliant les deux extrémités de l'enroulement secondaire (3) respectivement aux deux extrémités de la bobine du relais (4).

7. Déclencheur selon l'une quelconque des revendications précédentes, **caractérisé en ce que** le circuit secondaire (5) comporte en outre une capacité de stockage (14) et des moyens de comparaison (16), connectés à la capacité de stockage (14) et comportant une sortie de contrôle reliée à des moyens de commande (15) du relais (4) de manière à fournir un signal de déclenchement au relais (4) si la valeur de la tension de la capacité (14) est supérieure à un seuil prédéterminé.

8. Déclencheur selon la revendication 7, **caractérisé en ce que** les moyens de comparaison (16) comportent un comparateur.

9. Déclencheur selon la revendication 7, **caractérisé en ce que** les moyens de comparaison (16) comportent une diode à seuil de tension.

10. Déclencheur selon l'une quelconque des revendications 7 à 9, **caractérisé en ce que** les moyens de commande du relais (4) comportent un thyristor (15).


**Claims**

1. A trip device by fault current sensitive to pulsed currents, comprising a current transformer (1), a trip relay (4) and a secondary circuit (5) connecting said relay to the transformer, said transformer comprising a toroid (2) with a magnetic core, primary windings formed by the active conductors of an electrical installation to be protected and a secondary winding (3) at the terminals of which winding a differential fault signal is established when a differential fault occurs in the primary windings, the above-mentioned secondary winding being designed to be connected to the trip relay by the secondary circuit arranged to bring about tripping when said signal exceeds a preset threshold, **characterized in that** the magnetic core of the above-mentioned toroid (2) presents a ratio between the dynamic induction elevation $\Delta Bdyn$ at 400 Hz and the dynamic induction elevation $\Delta Bdyn$ at 50 Hz greater than 0.7, for a field intensity amplitude H of about 35 mAt/cm and that the above-mentioned secondary circuit (5) comprises a full-wave rectifier (6, 7; 9 to 12), said rectifier comprising two diodes (6, 7) respectively connecting the two ends of the secondary winding (3) to one of the ends of the coil of the relay (4), the other end whereof is connected to a mid-point (3a) of the secondary winding (3).

2. The trip device according to claim 1, **characterized in that** the magnetic core of the toroid (2) presents a remanence ratio Br/Bs < 0.3, a dynamic induction elevation $\Delta B$ (dyn) > 0.6T, for a field intensity amplitude of 100 mA/cm, a maximum dynamic induction elevation $\Delta B$ dyn greater than 0.7T, and a ratio between the dynamic induction elevation and the induction amplitude $\Delta B$ dyn / ^B > 0.7.

3. The trip device according to claim 1 or 2, **characterized in that** the magnetic core is made from a soft magnetic iron-based alloy, composed of more than 50 % of fine crystal grains of a size smaller than 100 nm and containing, in addition to an iron content greater than 60 % (at), 0.5 to 2 % of copper, 2 to 5 % at least of one of the following metals, niobium, tungsten, tantalum, zirconium, hafnium, titanium and/or molybdenum, 5 to 14 % of boron and 14 to 17 % of silicon.

4. The trip device according to any one of the foregoing claims, **characterized in that** the magnetic core of the toroid (2) is made of a nanocrystalline material

5. The trip device according to claim 1, **characterized in that** the magnetic core of the toroid (2) is made of an amorphous material.

6. The trip device according to any one of the claims 1 to 5, **characterized in that** the above-mentioned rectifier comprises a diode bridge P respectively connecting the two ends of the secondary winding (3) to the two ends of the coil of the relay (4).

7. The trip device according to any one of the foregoing claims, **characterized in that** the secondary circuit (5) comprises in addition a storage capacitor (14) and means for comparison (16) connected to the storage capacitor (14) and comprising a monitoring output connected to control means (15) of the relay (4) so as to supply a tripping signal to the relay (4) if the value of the voltage of the capacitor (14) is greater than a preset threshold.

8. The trip device according to claim 7, **characterized in that** the means for comparison (16) comprise a comparator.

9. The trip device according to claim 7, **characterized in that** the means for comparison (16) comprise a voltage threshold diode.

10. The trip device according to any one of the claims 7 to 9, **characterized in that** the control means of the relay (4) comprise a thyristor (15).

**Patentansprüche**

1. Fehlerstromauslöser mit Ansprechempfindlichkeit für pulsierende Ströme, der einen Stromwandler (1), ein Auslöserelais (4) und eine Sekundärkreisschaltung (5) zur Verbindung des genannten Relais mit dem Stromwandler umfaßt, wobei der genannte Stromwandler einen Magnetkernring (2), Primärwicklungen, die durch die aktiven Leiter einer zu schützenden elektrischen Installation gebildet werden, sowie eine Sekundärwicklung (3) aufweist, an deren Klemmen bei Auftreten eines Differenzstromfehlers in den Primärwicklungen ein Differenzstromfehlersignal anliegt, und die genannte Sekundärwicklung dazu dient, mit dem Auslöserelais über die Sekundärkreisschaltung verbunden zu werden, die so ausgelegt ist, daß sie eine Auslösung bewirkt, wenn das genannte Signal einen festgelegten Schwellwert überschreitet,
**dadurch gekennzeichnet, daß** der genannte Magnetkern des Rings (2) bei einer Amplitude der Feldstärke H von ca. 35 mA t/cm ein Verhältnis zwischen dem dynamischen Induktionsanstieg ∆B dyn bei 400 Hz und dem dynamischen Induktionsanstieg ∆B dyn bei 50 Hz von > 0,7 aufweist und daß die genannte Sekundärkreisschaltung (5) einen Zweiweggleichrichter (6, 7; 9 bis 12) umfaßt, welcher Gleichrichter zwei Dioden enthält (6, 7), die die beiden Enden der Sekundärwicklung (3) mit dem einen Ende der Spule des Relais (4) verbinden, während das andere Spulenende an einen Mittelabgriff (3a) der Sekundärwicklung (3) angeschlossen ist.

2. Auslöser nach Anspruch 1, **dadurch gekennzeichnet, daß** der Magnetkern des Rings (2) ein Remanenzverhältnis von Br/Bs < 0,3, einen dynamischen Induktionsanstieg von ∆B (dyn) > 0,6T bei einer Feldstärke von 100 mA/cm, einen maximalen dynamischen Induktionsanstieg ∆B dyn max > 0,7T sowie ein Verhältnis zwischen dem dynamischen Induktionsanstieg und der Amplitude der Induktion von $\frac{\Delta Bdyn}{^{\wedge}B}$ > 0,7 aufweist.

3. Auslöser nach Anspruch 1 oder 2, **dadurch gekennzeichnet, daß** der Magnetkern aus einer magnetischen Weicheisenlegierung besteht, die sich zu über 50 % aus Feinkristalliten einer Größe von < 100 nm zusammensetzt und neben einem Eisenanteil von über 60 % (at), 0,5 bis 2 % Kupfer, mindestens 2 bis 5% eines der Metalle Niob, Wolfram, Tantal, Zirkon, Hafnium, Titan und/oder Molybdän, sowie 5 bis 14% Bor und 14 bis 17% Silizium enthält.

4. Auslöser nach irgendeinem der vorhergehenden Ansprüche, **dadurch gekennzeichnet, daß** der Magnetkern des Rings (2) aus einem nanokristallinen Werkstoff besteht.

5. Auslöser nach Anspruch 1, **dadurch gekennzeichnet, daß** der Magnetkern des Rings (2) aus einem amorphen Werkstoff besteht.

6. Auslöser nach irgendeinem der Ansprüche 1 bis 5, **dadurch gekennzeichnet, daß** der genannte Gleichrichter eine Diodenbrücke P umfaßt, die die Enden der Sekundärwicklung (3) mit den Enden der Spule des Relais (4) verbindet.

7. Auslöser nach irgendeinem der vorhergehenden Ansprüche, **dadurch gekennzeichnet, daß** die Sekundärkreisschaltung (5) zusätzlich eine Speicherkapazität (14) sowie Vergleichsmittel (16) umfaßt, die an die Speicherkapazität (14) angeschlossen sind und einen an die Mittel (15) zur Ansteuerung des Relais (4) angeschlossenen Steuerausgang aufweisen, derart daß das Relais (4) mit einem Auslösesignal beaufschlagt wird, wenn die Spannung der Speicherkapazität (14) einen festgelegten Schwellwert überschreitet.

8. Auslöser nach Anspruch 7, **dadurch gekennzeichnet, daß** die Vergleichsmittel (16) einen Komparator umfassen.

9. Auslöser nach Anspruch 7, **dadurch gekennzeichnet, daß** die Vergleichsmittel (16) eine Spannungsschwellwertdiode umfassen.

10. Auslöser nach einem der Ansprüche 7 bis 9, **dadurch gekennzeichnet, daß** die Mittel zur Ansteuerung des Relais (4) einen Thyristor (15) umfassen.

FIG. 1

FIG. 2

FIG.3

FIG. 4

EP 0 821 830 B1

FIG. 5

FIG. 6

FIG. 7

FIG.8